Europäisches Patentamt

European Patent Office

Office européen des brevets

(11) Publication number: **0 272 714 B1**

(12) **EUROPEAN PATENT SPECIFICATION**

(45) Date of publication of patent specification: **24.06.92**   (51) Int. Cl.5: **H04B 3/23**

(21) Application number: **87202193.6**

(22) Date of filing: **11.11.87**

(54) **Adjustable echo canceller.**

(30) Priority: **17.11.86 BE 2061088**

(43) Date of publication of application:
**29.06.88 Bulletin 88/26**

(45) Publication of the grant of the patent:
**24.06.92 Bulletin 92/26**

(84) Designated Contracting States:
**AT CH DE ES FR GB IT LI NL SE**

(56) References cited:
**EP-A- 0 122 594**

**IEEE INTERNATIONAL CONFERENCE ON
COMMUNICATIONS ICC '84, Amsterdam,
14th-17th May 1984, vol. 1, pages 360-364,
IEEE/Elsevier Science Publishers B.V.
(North-Holland); T. KAMITAKE: "Fast start-up
of an echo canceller in a 2-wire full-duplex
modem"**

**FIFTH INTERNATIONAL CONFERENCE ON
DIGITAL SATELLITE COMMUNICATIONS,
Genoa, 23rd-26th March 1981, pages 259-264;
M. COPPERI et al.: "A new approach for a
microprogrammed echo canceller"**

(73) Proprietor: **Alcatel N.V.
Strawinskylaan 537 (World Trade Center)
NL-1077 XX Amsterdam(NL)**

(72) Inventor: **Hoefkens, Daniel Simon Gregoire
Pater Damiaanstraat 35
B-2610 Wilrijk(BE)**
Inventor: **Geernaert, Gustaaf Alfons Leon
Haantjeslei 32
B-2018 Antwerp(BE)**
Inventor: **Spaenjers, Joannes Hendrik Palmyre Maria
Wilgendreef 23
B-2180 Kalmthout(BE)**
Inventor: **Boeykens, Eduard Christiaan Maria
Victor de Witstraat 49
B-2680 Hingene(BE)**
Inventor: **Verhille, Henri Albert Julia
Te Boelaerlei 81
B-2200 Borgerhout(BE)**

(74) Representative: **Vermeersch, Robert et al
BELL TELEPHONE MANUFACTURING COM-
PANY Naamloze Vennootschap Patent De-
partment Francis Wellesplein 1
B-2018 Antwerpen(BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

PATENT ABSTRACTS OF JAPAN, vol. 8, no. 49 (E-230)[1486], 6th March 1984 & JP-A-58 204 633

NEC RESEARCH AND DEVELOPMENT, no. 28, January 1973, pages 100-109; M. TACHIBANA et al.: "A fast-converging equalizer algorithm for digital communication"

IEEE JOURNAL OF SOLID STATE CIRCUITS, vol. SC-20, no. 3, June 1985, pages 679-687, IEEE, New York, US; P. DEFRAEYE et al.: "A 3-mum CMOS digital codec with programmable echo cancellation and gain setting"

## Description

The present invention relates to an echo canceller system for a telecommunication system and including an adjustable echo canceller and processing means, said echo canceller being coupled between a receive path and a transmit path of a transmitter/ receiver equipment and including a digital filter producing a replica signal of an echo signal which appears on said transmit path in response to an input signal being applied to said receive path, and a subtractor circuit to subtract said replica signal from said echo signal, the input, echo and replica signals being sampled digital signals and said digital filter including a plurality of multipliers each multiplying a coefficient of the digital filter with a factor which is function of said input signal, and adder means for summing the outputs of said multipliers and so producing samples of said replica signal, said processing means being adapted to apply an input signal to said receive path and to determine said filter coefficients by measuring a plurality of samples of the echo signal received in return on said transmit path when all said filter coefficients are set to zero.

Such an echo canceller system is already known in the art, e.g. from the published European Patent Application No EP-0 122 594-A3. In this known system, the processing means which are used for determining the filter coefficients should be located near to the echo canceller to avoid that the measurements are affected by long distance links between these processing means and the echo canceller. Furthermore, the processing means need to be permanently connected to the echo canceller because a new set of filter coefficients may have to be determined at a regular time schedule, e.g. every night, after having detected that the remaining echo signal exceeds acceptable values or when the transmitter/receiver equipment to which the echo canceller is coupled has been modified. This makes the echo canceller system costly and increases the space occupied thereby. Finally, in the known document, nothing is said about how the factors of the replica signal sample(s) are determined.

An object of the present invention is to provide an echo canceller system of the above type but wherein the filter coefficients are determined in a cheap and relatively simple way.

According to the invention, this object is achieved due to the fact that said processing means are further adapted to measure the factors of said replica signal sample by successively measuring the replica signal samples obtained at a first location relatively close to said adjustable echo canceller when said echo canceller system is isolated from the other parts of the telecommunication system and when all said filter coefficients are set to zero except the one with which said factor is multiplied, that said processing means are adapted to measure said plurality of samples of said echo signal from a second location relatively distant from said adjustable echo canceller, that said processing means are also adapted to measure the delay to which a signal is subjected when flowing between said first and said second locations, in order to correlate the measurements performed at said first and second locations, and that said filter coefficients are determined as a function of both said factors of said replica signal sample and said plurality of samples of said echo signal.

Because the factors of the replica signal sample have to be determined only once for a digital filter, this may for instance be done in a laboratory before the installation on-site of the echo canceller. On the other hand, the filter coefficients may easily be determined from the second location which is for instance coupled to said transmitter/receiver equipment via time division multiplex communication paths.

It is to be noted that an echo canceller of the above type and called digital hybrid is also known from the article "A 3- um CMOS Digital Codec with Programmable Echo Cancellation and Gain Setting" by P. DEFRAEYE et al, published in the IEEE JOURNAL OF SOLID-STATE CIRCUITS, Vol. SC-20, No 3, June 1985, pages 649 to 687. However, in this article, no information is given about how the coefficients of the filter included in the echo canceller are determined.

Still another characteristic feature of the present echo canceller system is that said second location is common to a plurality of said transmitter/receiver equipments.

In this way, the processing means may be used in common for a plurality of adjustable echo cancellers so that the filter coefficients of these adjustable echo cancellers may be determined by making use of a minimum amount of equipment. Moreover, any possible update of the processing means has to be performed only once and not for each transmitter/receiver equipment.

Also another characteristic feature of the present echo canceller system is that said processing means measure a plurality of echo signal samples equal to the number of filter coefficients to be determined and determine said filter coefficients by solving a same number of mathematical relations each constituted by the sum of a same number of products, each of said products being equal to the multiplication of a distinct one of said factors of said replica signal sample with a corresponding one of said filter coefficients.

The present invention also relates to a method for determining the coefficients of a digital filter of an adjustable echo canceller for a telecommunication system, said adjustable echo canceller being coupled between a receive path and a transmit path of a transmitter/ receiver equipment, and producing a replica signal of an echo signal which appears on said transmit path in response to an input signal applied to said receive path, the input, echo and replica signals being sampled digital signals and said echo and replica signals being substracted from each other by a subtractor circuit, said digital filter including a plurality of multipliers each multiplying a coefficient of the digital filter with a factor which is function of said input signal, and adder means for summing the outputs of said multipliers and so producing samples of said replica signal, and said method including the step of applying an input signal to said receive path and of measuring a plurality of samples of the echo signal received in return on said transmit path when all said filter coefficients are set to zero.

This method is characterized by the fact that it includes another step of measuring the factors of said replica signal sample by successively measuring the replica signal samples obtained at a first location relatively close to said adjustable echo canceller when said echo canceller system is isolated from the other parts of the telecommunication system and when all said filter coefficients are set to zero except the one with which said factor is multiplied, that during the first mentioned step said plurality of samples of said echo signal are measured from a second location relatively distant from said adjustable echo canceller, and that said filter coefficients are determined in function of both said factors of said replica signal sample and said plurality of samples of said echo signal.

The above mentioned and other objects and features of the invention will become more apparent and the invention itself will be best understood by referring to the following description of an embodiment taken in conjunction with the accompanying drawings wherein :

Fig. 1 shows part of a telecommunication system with a Digital Signal Processor DSP including an echo canceller according to the invention;

Fig. 2 represents the DSP of Fig. 1 and the echo canceller DIH, AD2 in more detail;

Fig. 3 shows the digital filter DIH included in the echo canceller DIH, AD2 of the DSP of Fig. 2 in detail; and

Figs. 4(a) to 4(g) represent various signals waveforms used to illustrate the operation of the echo canceller.

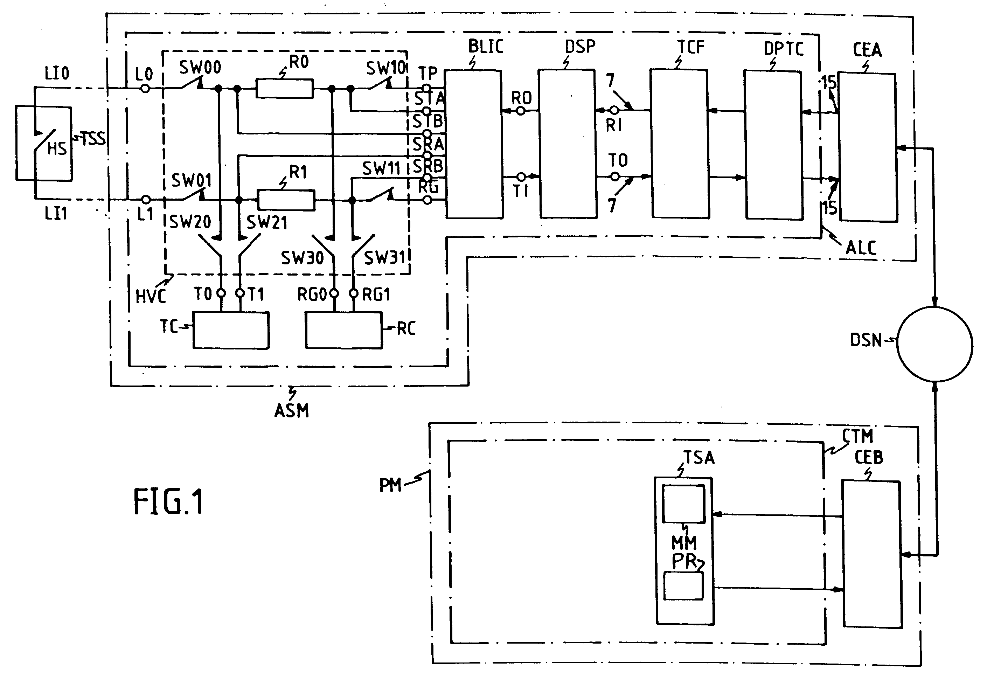

The part of a telecommunication system shown in Fig. 1 includes a Digital Switching Network DSN to which are coupled :

- an Analog Subscriber Module ASM including a Control Element CEA which is common for 16 Analog Line Controllers ALC of which only one is shown in relative detail; and
- a Processor Module PM including a Clock and Tone Module CTM and a second Control Element CEB.

DSN, ASM and PM are located in a digital telecommunication exchange and each analog line controller ALC is provided in common for 8 telecommunication lines such as the one shown which has conductors L10 and L11 connected to a telephone subset TSS.

Each such a controller ALC includes the cascade connection of a Dual Processor Terminal Controller DPTC, a TransCoder and Filter circuit TCF, a Digital Signal Processor DSP, a BIMOS subscriber Line Interface Circuit BLIC and a High Voltage switch Circuit HVC. The DPTC is for instance of the type disclosed in the published European patent application No 85200207.7-2202/0155030 (F. VAN SIMAEYS et al 2-1-8-7-12), the TCF is of the type disclosed in the published European patent applications Nos 84201344.3/0145038 (D. RABAEY et al 1-1) and 84201345.0/0145039 (D. RABAEY et al 2-2), the BLIC is of the type disclosed in the published European patent application No 85200774.9-2202/0201635 (J. PIETERS et al 3-4) and the HVC is of the type disclosed in the Belgian patents Nos 897772 (G. REMMERIE et al 2-2), 903101 (G. REMMERIE et al 5/2-3/2), 902286 (G. REMMERIE et al 7-5-2), and 902285 (G. REMMERIE et al 8-7-3). Each pair of DPTC and TCF is common for 8 sets of DSP, BLIC and HVC, the HVC of each set being coupled to a telephone line. Each HVC includes :

- 4 pairs of bidirectional switches SW00/SW01 to SW30/SW31;
- line terminals L0 and L1 respectively connected to the line conductors L10 and L11;
- test terminals T0 and T1 respectively connected to like named terminals of the Test Circuit TC;
- ringing terminals RG0 and RG1 respectively connected to like named terminals of the Ringing Circuit RC;
- tip and ring terminals TP and RG respectively connected to like named output terminals of the BLIC; and
- terminals STA, STB, SRA and SRB respectively connected to like named control terminals of the BLIC.

In HVC, the line terminals L0/L1 are connected to TP/RG via the series connectors of SW00/SW01, 50 Ohms line feed resistors R0/R1 and SW10/SW11 respectively. The junction points STB and SRA of SW00

and R0 and of SW01 and R1 are connected to T0 and T1 of TC via SW20 and SW21 respectively, whilst the junction points STA and SRB of R0 and SW10 and of R1 and SW11 are connected to RG0 and RG1 of RC via SW30 and SW31 respectively. As shown for a switched through connection, series switches SW00, SW01, SW10 and SW11 are closed whereas the other shunt switches are open. All the switches are controlled by the BLIC so that HVC is able to establish either one of the following connections :

- between TSS and BLIC :
- between TSS and TC;
- between TSS and RC;
- between BLIC and TC; and
- between BLIC and RC.

The test circuit TC includes, amongst other circuits, a dummy network (not shown) used for simulating the subset TSS during the measurements and thus to avoid the cooperation of the subscriber which should have to off-hook his subset TSS, as will be described later. The function of the ringing circuit RC is to apply a ringing signal to the line L10/L11.

The subset TSS includes a normally open hook switch HS connected between the line conductors LI0 and LI1. The switch HS is closed when the subset TSS is off-hook.

The clock and tone module CTM forming part of Processor Module PM includes a Test Signal Analyzer TSA connected to the control element CEB. TSA includes a memory MM storing data and software programmes such as PROG1 to PROG4 and a processor PR to run these programmes, as will be described later.

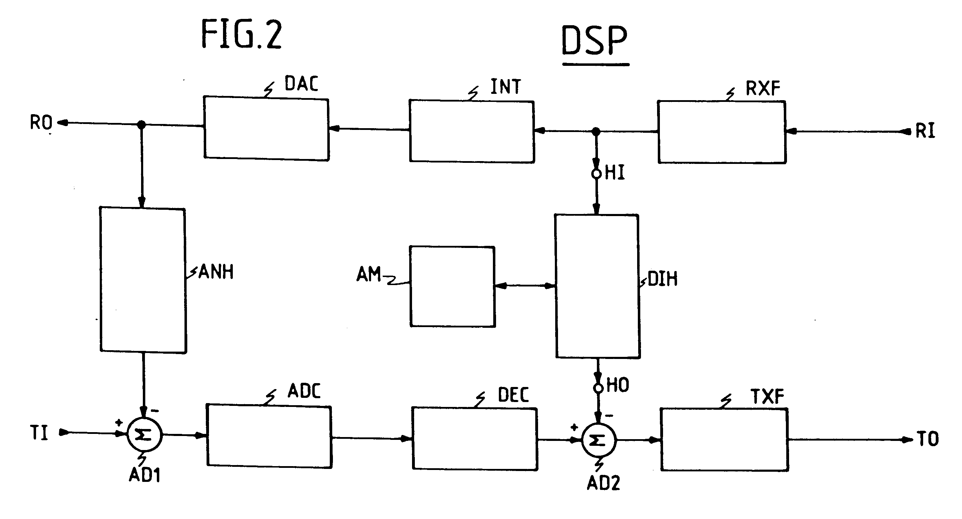

The digital signal processor DSP whose block diagram is shown in Fig. 2 has receive and transmit terminals RO and TI connected to like named terminals of the BLIC, and receive and transmit terminals RI and TO connected to like named terminals of the TCF respectively. The DSP is of the type described in detail in the above mentioned article "A 3- $\mu$m CMOS Digital Codec with Programmable Echo Cancellation and Gain Setting" by P. DEFRAEYE et al.

The DSP mainly includes, between its receive terminals RI and RO, the cascade connection of :
- a digital amplifier, interpolator and filter circuit RXF to convert 8 kilobit/second (kb/s) digital signals, received from TCF on terminal RI and which are obtained by sampling, to 32 kb/s digital signals;
- an interpolator INT to increase the bitrate of these signals to 1 Megabit/second; and
- a digital-to-analog converter DAC to convert these 1 Megabit/second digital signals to analog signals.

On the other hand, between its transmit terminals TI and TO, DSP mainly includes the cascasde connection of :
- an analog subtractor AD1 whose adding input (+) is connection to TI and whose subtracting input (-) is connected to the output of an analog hybrid ANH the input of which is connected to terminal RO;
- an analog-to-digital converter ADC to convert the analog signals received from the subset TSS to 1 Megabit/second digital signals;
- a decimator DEC to reduce the frequency of these digital signals to 32 kb/s;
- a digital subtractor AD2 whose adding input (+) is connected to the output of DEC and whose subtracting input (-) is connected to the input HO of a digital hybrid DIH the input HI of which is connected between RXF and INT; and
- a digital filter, decimator and amplifier circuit TXF to convert the 32 kb/s digital signals to 8 kb/s digital signals prior to sending them to TCF.

The analog hybrid ANH is able to perform echo cancellation on analog signals transmitted to TSS via RO and received back as echo signals in DSP at terminal TI, whilst the purpose of the digital hybrid DIH is to cancel the excess of echo signals remaining after their passage through AD1. DIH is mainly constituted by a digital filter the coefficients of which are stored in an Auxiliary Memory AM which forms part of DSP and is coupled to DIH.

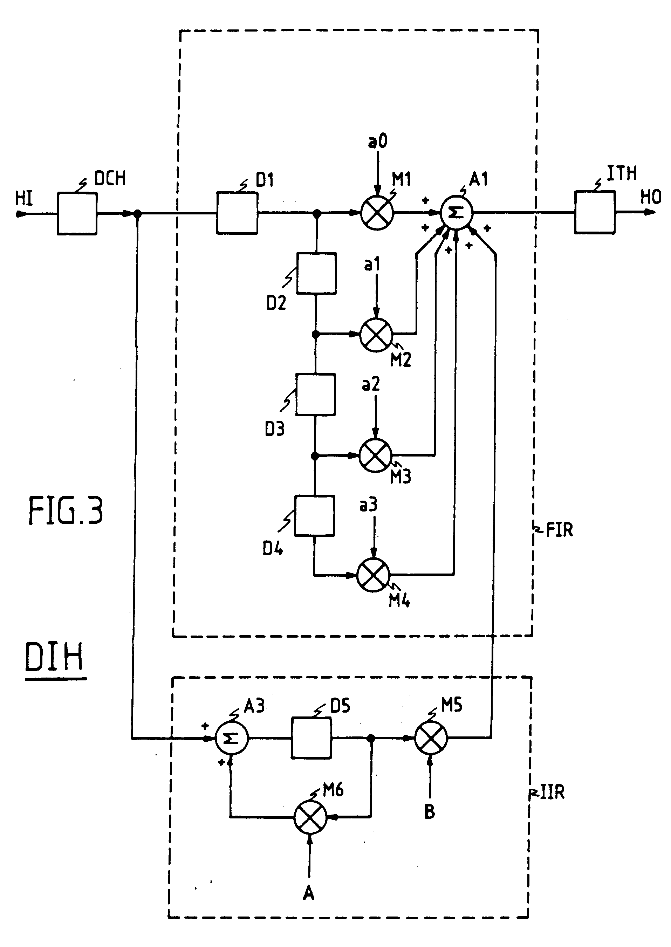

The digital hybrid DIH is shown in detail in Fig. 3. It mainly includes a 4-tap Finite Impulse Response digital filter FIR which is connected in parallel with a first order Infinite Impulse Response digital filter IIR. More particularly, DIH includes between its terminals HI and HO the series connection of a delay and decimator circuit DCH, the filter FIR in parallel with the filter IIR, and an interpolator ITH. The delay and decimator circuit DCH reduces to 16 kb/s the bitrate of the 32 kb/s digital input signals at HI by eliminating every second sample, whilst the interpolator ITH increases the bitrate of these signals again to 32 kb/s prior to supply them to the subtracting input (-) of AD2 via HO. This means that the filters FIR and IIR operate at 16 kb/s instead of at 32 kb/s. By proceeding in this way, their construction may be simplified.

The 4-tap filter FIR includes the cascade connection of four delay circuits of one sampling period D1, D2, D3 and D4 whose junction points are connected to distinct adding inputs (+) of a multi-input adder A1 via respective multipliers M1 to M4. The filter coefficients a0, a1, a2 and a3 are applied to second inputs of M1, M2, M3 and M4 respectively. These coefficients each may have a value ranging between -2 and +2 and are stored in the auxiliary memory AM of the DSP.

The first order filter IIR includes between DCH and a fifth adding input (+) of A1 (FIR) the series connection of an adder A3, a delay circuit of one sampling period D5, and a multiplier M5. A scaling factor or filter coefficient B is applied to a second input of M5 and the output of D5 is fed back to a second adding input (+) of A3 via a multiplier M6. The coefficient B of the filter IIR may have a value ranging between 0 and +1 because only low-pass filter characteristics have to be generated. A coefficient A which is a pole of the filter IIR is applied to a second input of M6. These coefficients A and B are also stored in the auxiliary memory AM of the DSP.

As is well known in the digital filter art, the value of the output signal $y_F$ of the filter FIR at a time kT may be written :

$$y_F[kT] = a0.x[(k-1)T] + a1.x[(k-2)T] + a2.x[(k-3)T] + a3.x[(k-4)T] \qquad (1)$$

where

$x[kT]$     is the value of an input sequence x(t) at a discrete time kT;

$x[(k-n)T]$     is the value of $x[kT]$ delayed by a delay equal to nT;

with

k =     0, 1, 2, 3, ...; and

n =     1, 2, 3, 4, ....

Also the value of the output signal $y_I$ of the filter IIR at a time kT may be written :

$$y_I[kT] = B \sum_{N=1}^{k} A^{N-1}.x[(k-N)T] \qquad (2)$$

where $x[(k-N)T]$ is the value of $x[kT]$ delayed by a delay equal to NT.

It should be noted that in a preferred embodiment, the input sequence x(t) is a digitalized and samples version of an analog pulse signal which has a total duration of 4 milliseconds or 32 x 125 microseconds and a pulse duration of 125 microseconds, the sampling being performed once per frame always during a same channel. The duration of a frame of Time Division Multiplex (TDM) transmission is 125 microseconds, each frame comprising 32 channels. In practice, to increase the accuracy of the measurement, the analog pulse signal is for instance repeated 30 times and thus generator 30 analog output signals of which only the 10 last signals are considered to calculate the average in order to obtain a mean analog output signal. The sampled and digitized version of this means analog output signal is an output sequence y(t).

Because the filters FIR and IIR are connected in parallel the global output signal may be written :

$$y[kT] = y_F[kT] + y_I[kT] \qquad (3)$$

$$y[kT] = a0.x[(k-1)T] + a1.x[(k-2)T] + a2.x[(k-3)T] +$$

$$a3.x[(k-4)T] + B \sum_{N=1}^{k} A^{N-1}.x[(k-N)T] \qquad (4)$$

This means that the FIR/IIR filter network is able to supress at any discrete time kT the echo signal which then has the value y[kT] produced by the input signal x(t) when the filter coefficients have such a value that the relation (4) is satisfied. Indeed, the signal at the output terminal HO or DIH is then an exact replica of the echo signal appearing at the output of the decimator DEC (Fig. 2) and since these two signals are subtracted from each other in the digital subtractor AD2 no echo signal will appear at the output of the latter AD2 and thus also at the output of the DSP.

At the initialization of the telecommunication system, a standard set of filter coefficients is loaded in the auxiliary memory AM of the DSP. These coefficients are verified at regular time intervals by an maintenance procedure during which a loop is established between TSA and the test circui TC by closing the switches SW10/SW11 and SW20/SW21 and by opening the switches SW00/SW01 and SW30/SW31. Under the control of the programme PROG1, a pulse sequence, e.g. as the one mentioned above, is then transmitted from TSA to TC and receive back in TSA as a samples echo signal. The transhybrid loss of DIH is checked

6

by comparing the electric power of this echo signal with a predetermined power value stored in a memory (not shown) of the exchange. If the power of the received signal is less than the predetermined value, e.g. for a transhybrid loss of -30 dB, the coefficients of the filters FIR and IIR are considered to be satisfactory and are therefore not modified. In the other case, the filter coefficients have to be modified. This is then done automatically during the maintenance procedure which operates as described below by using the dummy network of the test circuit TC.

Also on complaints of the subscriber or on decision of the system supervisor the filter coefficients may be updated. In these cases, an operator starts manually the procedure to modify the filter coefficients.

Software programmes PROG2 to PROG4 are executed during the modification procedure in order to determine a new set of filter coefficients a0 to a3 and B. It is to be noted that the coefficient A which is a pole of the filter IIR is not modified by these programmes notably for stability reasons.

In principle, the 5 filter coefficients a0 to a3 and B may be determined in TSA by measuring the echo signal or output sequence y(t) received back from TSS and to be compensated by the hybrid DIH, and by measuring the contribution of each of these filter coefficients to the value, e.g. y[kT], of the replica of this echo signal which has to be produced by DIH at that moment, i.e. by determining the factors x[(k-1)T], x[(k-2)T], etc. multiplying these filter coefficients in the above equation (4). By performing the latter measurements for 5 distinct values of k, the 5 filter coefficients may be calculated from 5 equations similar to (4) which may then be written.

The measurements in TSA of the contribution of each of the filter coefficients to the replica of the echo signal are not very accurate because of the influence of noise introduced in the circuitry of the telecommunication system. For this reason, it is preferred to perform these measurements in laboratory where the influence of the analog part can be inhibited by performing a separation at the chip level in order to isolate the digital hybrid and by measuring between the terminals RI and TO of the DSP. It is to be noted that the contribution of the filter coefficients to the signal generated by DIH is invariable for all the chips of a same design so that these measurements in laboratory has to be performed only once. In this case of laboratory measurements, the delay introduced by the circuitry linking TSA to RI and TO is neglected so that one does not exactly know which value y[kT] or y(t) is cancelled by the measured contributions. For this reason, the measurements in laboratory necessities an additional measurement of the last mentioned delay.

For the above mentioned reasons, the following operations are performed under the control of the programmes PROG2 to PROG4 :
- under the control of PROG2 the contribution of each of the coefficients a0 to a3 and B to the output signal of DIH is measured only once in laboratory between the terminals RI and TO coupled to DIH;
- under the control of PROG3 the delay produced by the circuitry connecting TSA to RI, TO, and which has been neglected during the execution of PROG2, is measured in TSA after a loop has been established between TSA and DSP; and
- under the control of PROG4 the real echo signal y(t) to be cancelled by DIH is measured in TSA after a loop has been established between TSA and TSS, and new filter coefficients a0 to a3 and B are calculated.

The programmes PROG2 to PROG4 are now considered in relative detail.

## PROG2

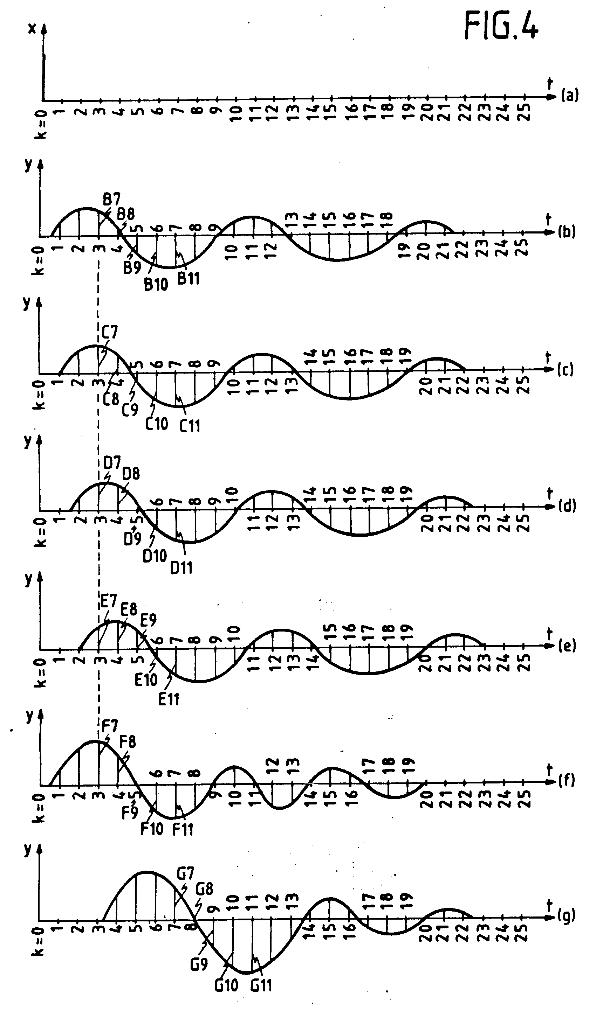

After the digital hybrid DIH, the digital subtractor AD2 and the circuits RXF and TXF have been isolated from the other circuitry of the exchange, an above mentioned input sequence x(t) of which part of a sequence period is represented in Fig. 4(a) is applied to the terminal RI. The filter coefficient a0 is then made equal to 1 whereas the others are maintained on 0 so that the successive sample values then received on terminal TO and shown in Fig. 4(b) only are the contribution of the coefficient a0 to the successive sample values y[kT] with k = 0, 1, 2, ... of the output signal y(t) of DIH. The other filter coefficients a1 to a3 and B are likewise each successively made equal to 1 while the remaining coefficients are then maintained on 0, and their contributions to the output signal y(t) of DIH are represented in the Figs. 4(c) to 4(f) respectively.

As follows from the above relation (4), the contributions of the filter coefficients a0 to a3 and B to the output signal y(t) of DIH and thus also to the cancelling of the value y[kT] of the identical echo signal y(t) at the moment kT are respectively :

x[(k-1)T]     (5)
x[(k-2)T]     (6)

7

x[(k-3)T]     (7)
x[(k-4)T]     (8)

$$\sum_{N=1}^{k} A^{N-1} . x[(k-N)T] \qquad (9)$$

PROG3

Under the control of this programme, the above mentioned delay introduced by the circuitry linking TSA to the terminals RI and TO is measured. In this connection, it should be noted that because of the time division multiplex (TDM) transmission of the signals in the digital exchange, this delay depends essentially on the communication path established between TSA and DSP. PROG3 therefore calculates the transmission delay of the signals from TSA to DSP for the same communication path as will be used during the execution of PROG4.

To provide a maximum transmission of the signals through the digital hybrid DIH, the filter coefficients a1 to a3 and B are set to 0, whilst a0 is set to its maximum value, i.e. 2. Then, the above mentioned input sequence x(t) partially shown in Fig. 4(a) is applied to DIH from TSA so that the signal or output sequence y(t) (not shown) received back in TSA is similar, except for the amplitude which is proportional to the value of a0, to that represented in Fig. 4(b) but delayed with respect to this signal. In TSA, the value of this delay is obtained by correlating both these signals by means not shown but well known in the art.

It is to be noted that this delay is always expressed by an integer number of discrete time intervals T, i.e. that k is an integer. This delay is for instance equal to 4T.

PROG4

The communication path established between TSA and DSP for PROG3 is maintained and extended to TSS, and an above mentioned input sequence x(t) is applied to TSS from TSA.

It is to be noted that during the execution of PROG4, the cooperation of the subscriber, which has to off-hook his subset TSS in order to open the switch HS, is preferred to the dummy network of the test circuit TC because the measurement is then performed on the real subscriber line LI0/LI1.

During the execution of PROG4, the coefficients a0 to a3 and B of DIH are all set to 0 so that no signal can pass through DIH and that the sample values received back in TSA are the sample values y(kT), with k = 0, 1, 2, ..., of the echo signal y(t) to be compensated by DIH. These various sample values and the resulting echo signal are represented in Fig. 4(g).

The above delay determined by PROG3, e.g. equal to 4T, means that the signal waveforms shown in the Figs. 4(b) to 4(f) have to be shifted in time over a time interval equal to 4T in order that the values of the samples of y(t) shown in Fig. 4(g) should correspond to those of the factors multiplying a0 to a3 and B in the above relation (4). For instance, the contributions of the filter coefficients to the cancelling of the sample value G7 (for k = 7) in Fig. 4(g) are B7 to F7 (for k = 3) shown in Figs. 4(b) to 4(f) respectively so that the equation (4) becomes :

G7 = a0.B7 + a1.C7 + a2.D7 + a3.E7 + B.F7     (10)

In a same way one may write four other similar equations for instance linking the values G8 to G11 of y-(t) to the corresponding values of the contributions, i.e. :

G8 = a0.B8 + a1.C8 + a2.D8 + a3.E8 + B.F8     (11)
G9 = a0.B9 + a1.C9 + a2.D9 + a3.E9 + B.F9     (12)
G10 = a0.B10 + a1.C10 + a2.D10 + a3.E10 + B.F10     (13)
G11 = a0.B11 + a1.C11 + a2.D11 + a3.E11 + B.F11     (14)

From these 5 equations (10) to (14), PROG4 may calculate the values of the filter coefficients a0 to a3 and B.

The new filter coefficients calculated by PROG4 are then substituted for the old ones in the auxiliary memory AM of the DSP mentioned above and PROG1 is run again for verification.

If the new coefficients, calculated with TSS connected to the exchange, meet the requirements, a flag is set to prevent PROG1 from verifying them again with respect to the dummy network of TC during a consecutive maintenance procedure and to report erroneous values of the echo response.

**Claims**

1. Echo canceller system (DIH, AD2, TSA) for a telecommunication system and including an adjustable echo canceller (DIH, AD2) and processing means (TSA), said echo canceller being coupled between a receive path (RI, RO) and a transmit path (TI, TO) of a transmitter/ receiver equipment (TSS, ASM) and including a digital filter (DIH) producing a replica signal of an echo signal which appears on said transmit path in response to an input signal being applied to said receive path, and a subtractor circuit (AD2) to subtract said replica signal from said echo signal, the input, echo and replica signals being sampled digital signals and said digital filter including a plurality of multipliers (M1-M5) each multiplying a coefficient (a0-a3, B) of the digital filter with a factor which is function of said input signal, and adder means (A1) for summing the outputs of said multipliers and so producing samples of said replica signal, said processing means being adapted to apply an input signal (x(t)) to said receive path (RI) and to determine said filter coefficients by measuring (PROG4) a plurality of samples (y[kT]) of the echo signal (y(t)) received in return on said transmit path (TO) when all said filter coefficients are set to zero, characterized in that said processing means (TSA) are further adapted to measure (PROG2) the factors of said replica signal sample by successively measuring the replica signal samples obtained at a first location relatively close to said adjustable echo canceller (DIH, AD2) when said echo canceller system is isolated from the other parts of the telecommunication system and when all said filter coefficients (a0-a3, B) are set to zero except the one with which said factor is multiplied, that said processing means are adapted to measure (PROG4) said plurality of samples (y[kT]) of said echo signal (y(t)) from a second location relatively distant from said adjustable echo canceller, that said processing means are also adapted to measure (PROG3) the delay to which a signal is subjected when flowing between said first and said second locations, in order to correlate the measurements (PROG2, PROG4) performed at said first and second locations, and that said filter coefficients are determined as a function of both said factors of said replica signal sample and said plurality of samples of said echo signal.

2. Echo canceller system according to claim 1, characterized in that said second location is common (TSA) to a plurality of said transmitter/receiver equipments (TSS, ASM).

3. Echo canceller system according to claim 1 or 2, characterized in that said second location is coupled to said transmitter/receiver equipment (TSS, ASM) via time division multiplex (TDM) communication paths.

4. Echo canceller system according to claim 1, characterized in that said first location is the location of said transmitter/receiver equipment (TSS, ASM).

5. Echo canceller system according to claim 1, characterized in that said echo signals samples (y[kT]) are measured on-site from said second location (TSA) and in that said replica signal factors are measured in a laboratory which is said first location.

6. Echo canceller system according to claim 1, characterized in that said processing means (TSA) are adapted to measure (PROG4) a plurality of echo signal samples (y[kT]) equal to the number (5) of filter coefficients (a0-a3, B) to be determined and to determine said filter coefficients by solving a same number (5) of mathematical relations each constituted by the sum of a same number (5) of products, each of said products being equal to the multiplication of a distinct one of said factors of said replica signal sample with a corresponding one of said filter coefficients (a0-a3, B).

7. Echo canceller system according to claim 1, characterized in that said input signal (x(t)) is a digitized and sampled version of an analog pulse sequence.

8. Method for determining the coefficients (a0-a3, B) of a digital filter (DIH) of an adjustable echo canceller (DIH, AD2) for a telecommunication system, said adjustable echo canceller being coupled between a receive path (RI, RO) and a transmit path (TI, TO) of a transmitter/ receiver equipment (TSS, ASM), and producing a replica signal of an echo signal which appears on said transmit path in response to an input signal applied to said receive path, the input, echo and replica signals being sampled digital signals arid said echo and replica signals being substracted from each other by a subtractor circuit (AD2), said digital filter including a plurality of multipliers (M1-M5) each multiplying a coefficient (a0-a3, B) of the digital filter with a factor which is function of said input signal, and adder means (A1) for summing the outputs of said multipliers and so producing samples of said replica signal, and said method including the step of applying an input signal (x(t)) to said receive path (RI) and of measuring (PROG4) a plurality of samples (y[kT]) of the echo signal (y(t)) received in return on said transmit path (TO) when all said filter coefficients are set to zero, characterized in that said method includes another step of measuring (PROG2) the factors of said replica signal sample by successively measuring the replica signal samples obtained at a first location relatively close to said adjustable echo canceller (DIH, AD2) when said echo canceller is isolated from the other parts of the telecommunication system and when all said filter coefficients (a0-a3, B) are set to zero except the one with which said factor is multiplied, that during the first mentioned step said plurality of samples (y[kT]) of said echo signal (y(t)) are measured (PROG4) from a second location relatively distant from said adjustable echo canceller, and that said filter coefficients are determined as a function of both said factors of said replica signal sample and said plurality of samples of said echo signal.

9. Method according to claim 8, characterized in that said filter coefficients (a0-a3, B) are determined by the processing means (TSA) of the echo canceller system (DIH, AD2, TSA) according to claim 1.

**Revendications**

1. Système annuleur d'écho (DIH, AD2, TSA) destiné à un réseau de télécommunication est constitué d'un annuleur d'écho réglable (DIH, AD2) et de moyens de traitement (TSA), ledit annuleur d'écho étant inséré entre un chemin réception (RI, RO) et un chemin émission (TI, TO) d'un équipement émetteur-récepteur (TSS, ASM) et comprenant un filtre numérique (DIH) produisant un signal réplique du signal d'écho apparaissant sur ledit chemin d'émission en réponse à la présence d'un signal entrant arrivant au dit chemin de réception et un circuit soustracteur (AD2) ayant pour rôle de soustraire ledit signal de réplique dudit signal d'écho, les signaux entrant, écho et réplique étant des signaux numériques échantillonnés et ledit filtre numérique comportant plusieurs multiplicateurs (M1-M5) multipliant chacun un coefficient (a0-a3, B) du filtre numérique par un facteur fonction dudit signal entrant, et un dispositif additionneur (A1) destiné à additionner les sorties desdits multiplicateurs, de manière à produire les échantillons dudit signal réplique, lesdits moyens de traitement étant capables d'appliquer un signal entrant (x(t)) au dit chemin de réception (RI) et de déterminer lesdits coefficients du filtre en mesurant (PROG4) de multiples échantillons (y[kT])du signal écho (y(t)) reçu en retour sur ledit chemin d'émission (TO) quand tous les coefficients dudit filtre sont à zéro, caractérisé par le fait que lesdits moyens de traitement (TSA) sont également capables de mesurer (PROG2) les facteurs dudit échantillon du signal réplique en mesurant successivement les échantillons du signal réplique obtenus en un premier point, relativement proche dudit annuleur d'écho réglable (DIH, AD2), lorsque ledit annuleur d'écho est isolé des autres parties du circuit de télécommunication et lorsque tous lesdits coefficients du filtre (a0-a3, B) sont réglés à zéro, sauf celui par lequel ledit facteur est multiplié, que lesdits moyens de traitement sont capables de mesurer (PROG4) lesdits multiples échantillons (y[kT]) dudit signal d'écho (y(t)) à partir d'un second point, relativement éloigné dudit annuleur d'écho réglable, que lesdits moyens de traitement sont aussi capables de mesurer (PROG3) le retard auquel est soumis un signal lorsqu'il passe entre lesdits premier et deuxième points, afin de corréler les mesures (PROG2, PROG4) réalisées auxdits premier et deuxième points, et que lesdits coefficients de filtrage sont déterminés en fonction des deux dits facteurs dudit échantillon de signal réplique et desdits multiples échantillons dudit signal d'écho.

2. Système annuleur d'écho conforme à la revendication 1, caractérisé par le fait que ledit deuxième point est commun (TSA) à plusieurs desdits équipements émetteurs-récepteurs (TSS, ASM).

3. Système annuleur d'écho conforme à la revendication 1 ou 2, caractérisé par le fait que ledit deuxième point est couplé auxdits équipements émetteurs-récepteurs (TSS, ASM) par l'intermédiaire de chemins de communication à multiplexage temporel (TDM).

4. Système annuleur d'écho conforme à la revendication 1, caractérisé par le fait que ledit premier point est l'emplacement dudit équipement émetteur-récepteur (TSS, ASM).

5. Système annuleur d'écho conforme à la revendication 1, caractérisé par le fait que les échantillons de signal d'écho (y[kT]) sont mesurés sur place à partir dudit second point (TSA) et que lesdits facteurs du signal de réplique sont mesurés dans un laboratoire qui constitue ledit premier point.

6. Système annuleur d'écho conforme à la revendication 1, caractérisé par le fait que lesdits moyens de traitement (TSA) sont capables de mesurer (PROG4) un nombre d'échantillons du signal d'écho (y[kT]) égal au nombre (5) des coefficients de filtrage (a0-a3, B) qui doivent être déterminés et qu'ils déterminent lesdits coefficients en résolvant le même nombre (5) de relations mathématiques, constituées chacune par la somme du même nombre (5) de produits, chacun de ceux-ci étant égal à la multiplication de l'un desdits facteurs dudit échantillon du signal réplique par le coefficient correspondant du filtre (a0-a3, B).

7. Système annuleur d'écho conforme à la revendication 1, caractérisé par le fait que ledit signal entrant (x(t)) est une version numérisée et échantillonnée d'une séquence d'impulsions analogiques.

8. Méthode pour déterminer les coefficients (a0-a3, B) d'un filtre numérique (DIH) d'un annuleur d'écho réglable (DIH, AD2) destiné à un réseau de télécommunication, ledit annuleur d'écho réglable étant inséré entre un chemin réception (RI, RO) et un chemin émission (TI, TO) d'un équipement émetteur-récepteur (TSS, ASM) et produisant un signal réplique d'un signal d'écho qui apparaît sur ledit chemin d'émission en réponse à un signal entrant appliqué au dit chemin réception, les signaux entrant, d'écho et réplique étant soustraits l'un de l'autre par un circuit soustracteur (AD2), ledit filtre numérique comprenant plusieurs multiplicateurs (M1-M5) multipliant chacun un coefficient (a0-a3, a) du filtre numérique par un facteur fonction dudit signal entrant, et d'un dispositif additionneur (A1) pour additionner les sorties desdits multiplicateurs et produire ainsi les échantillons dudit signal réplique, et ladite méthode comportant une étape qui consiste à appliquer un signal entrant (x(t)) audit chemin de réception (RI) et à mesurer (PROG4) de multiples échantillons (y[kT]) du signal d'écho (y(t)) reçu en retour sur ledit chemin d'émission (TO) lorsque tous lesdits coefficients du filtre sont à zéro, caractérisée par le fait que ladite méthode comporte une autre étape de mesure (PROG2) des facteurs dudit échantillon de signal réplique, par mesure successive des échantillons du signal réplique obtenus en un premier point, relativement proche dudit annuleur d'écho réglable (DIH, AD2), lorsque ledit système annuleur d'écho est isolé des autres parties du réseau de télécommunication et lorsque tous lesdits coefficients de filtrage (a0-a3, a) sont à zéro, sauf celui par lequel ledit facteur est multiplié ; par le fait qu'au cours de la première étape mentionnée, lesdits multiples échantillons (y[kT]) du signal d'écho (y(t)) sont mesurés (PROG4) à partir d'un second point relativement éloigné dudit annuleur d'écho réglable et que lesdits coefficients de filtrage sont déterminés en fonction, à la fois, desdits facteurs dudit échantillon du signal réplique et desdits multiples échantillons dudit signal d'écho.

9. Méthode conforme à la revendication 8, caractérisée par le fait que lesdits coefficients de filtrage (a0-a3, B) sont déterminés par les moyens de traitement (TSA) du système annuleur d'écho (DIH, AD2, TSA) conformément à la revendication 1.

**Patentansprüche**

1. Echokompensator-System (DIH, AD2, TSA) für ein Nachrichtenübertragungssystem das einen einstellbaren Echokompensator (DIH, AD2) und Prozessormittel (TSA) enthält, wobei der Echokompensator zwischen dem Empfangszweig (RI,RO) und dem Sendezweig (TI, TO) einer Sende/Empfangs-Einrichtung (TSS, ASM) geschaltet ist und ein digitales Filter (DIH), das ein Nachbildungssignal eines Echosignals erzeugt, welches am Sendezweig durch ein auf dem Empfangszweig auftretendes Eingangssignal entsteht, und eine Substraktionsschaltung (AD2) enthält, die das Nachbildungssignal vom Echosignal substrahiert, wobei das Eingangssignal, das Echosignal und das Nachbildungssignal digitale Signalproben sind und das digitale Filter eine Anzahl von Multiplizierern (M1-M5), von denen jeder einen Koeffizienten (a0 - a3, B) des digitalen Filters mit einem Faktor multipliziert, der eine Funktion des genannten Eingangssignales darstellt, und Addiermittel (A1) enthält, die die Ausgangssignale der Multiplizierer addiert und so Proben der Nachbildungssignale erzeugt, wobei die Prozessormittel so ausgebildet sind, daß sie an den Empfangszweig (RI) ein Eingangssignal (x(t)) abgeben und die Filterkoeffizienten festlegen durch Messung (PROG4) einer Anzahl von Proben (y[kT]) des auf dem Sendezweig (TO) empfangenen zurückkehrenden Echosignals (y(t)) wenn alle Filterkoeffizienten auf 0 gesetzt sind,

dadurch gekennzeichnet, daß die Prozessormittel (TSA) weiters imstande sind, die Faktoren der Nachbildungssignalproben zu messen (PROG2) und zwar durch aufeinanderfolgendes Messen der Nachbildungssignalproben, die man an einem ersten, dem veränderbaren Echokompensator (DIH, AD2) relativ nahen Ort erhält, wenn das Echokompensatorsystem von den anderen Teilen des Nachrichtenübertragungssystems getrennt ist und wenn alle Filterkoeffizienten (a0 - a3, B), mit Ausnahme jenes mit dem der Faktor multipliziert wird, auf Null gesetzt sind, daß die Prozessormittel imstande sind, die Anzahl von Proben (Y[kT]) des Echosignals (y(t)) von einem zweiten, dem veränderbaren Echokompensator relativ fernen Ort zu messen (PROG4), daß diese Prozessormittel zur Korrelierung der Messungen (PROG2, PROG4), die bei den genannten ersten und zweiten Orten durchgeführt werden, weiters imstande sind, die Verzögerung zu messen (PROG3), die ein Signal bei der Übertragung zwischen dem ersten Ort und dem zweiten Ort ausgesetzt ist, und daß die Filterkoeffizienten als eine Funktion der beiden genannten Faktoren der Nachbildungssignalproben und der Anzahl von Echosignalproben ermittelt werden.

2. Echokompensatorsystem nach Anspruch 1, dadurch gekennzeichnet, daß der zweite Ort für eine Anzahl von Sende/Empfangseinrichtungen (TSM, ASM) gemeinsam vorgesehen ist.

3. Echokompensatorsystem nach Anspruch 1 oder 2, dadurch gekennzeichnet, daß dieser zweite Ort mit den Sende/Empfangseinrichtungen (TSS, ASM) über Zeitmultiplex(TDM)-Übertragungswege verbunden ist.

4. Echokompensatorsystem nach Anspruch 1, dadurch gekennzeichnet, daß der erste Ort der Standort der Sende/Empfangseinrichtung (TSS, ASM) ist.

5. Echokompensatorsystem nach Anspruch 1, dadurch gekennzeichnet, daß die Echosignalproben (y[kT]) vor Ort am zweiten Standort (TSA) und daß die Nachbildungssignalproben in einem Labor, welches den ersten Standort bildet, gemessen werden.

6. Echokompensatorsystem nach Anspruch 1, dadurch gekennzeichnet, daß die Prozessormittel (TSA) imstande sind, eine Anzahl von Echosignalproben (y[kT]) zu messen (PROG4), die der Anzahl (5) der zu bestimmten Filterkoeffizienten (a0-a3, B) entsprechen, und imstande sind, diese Filterkoeffizienten zu bestimmen, durch Lösung der gleichen Anzahl (5) von mathematischen Beziehungen, von denen jede aus einer Summe von der gleichen Anzahl (5) von Produkten gebildet wird, wobei jedes dieser Produkte gleich ist der Multiplikation eines einzelnen Faktors der Nachbildungssignalprobe mit dem korrespondierenden Filterkoeffizienten (o0-a3, B).

7. Echokompensatorsystem nach Anspruch 1, dadurch gekennzeichnet, daß das Eingangssignal (x(t)) eine digitalisierte und getastete Version einer analogen Pulsfolge ist.

8. Verfahren zur Bestimmung der Koeffizienten (a0-a3, B) eines digitalen Filters(DIH) eines einstellbaren Echokompensators (DIH, AD2) für ein Nachrichtenübertragungssystem, wobei der einstellbare Echokompensator zwischen dem Empfangszweig (RI,RO) und dem Sendezweig (TI,TO) einer Sende/Empfangseinrichtung (TSS,ASM) geschaltet ist und ein Nachbildungssignal eines Echo-Signals erzeugt, welches am Sendezweig durch ein auf dem Empfangszweig auftretendes Eingangssignal entsteht, wobei das Eingangssignal, das Echosignal und das Nachbildungssignal digitale Signalproben sind und das Echosignal und Nachbildungssignal voneinander durch eine Substraktionsschaltung (AD2) substrahiert wird und das digitale Filter eine Anzahl von Multiplizierern (M1-M5), von denen jeder einen Koeffizienten (a0-a3, B) des digitalen Filters mit einem Faktor multipliziert, der eine Funktion des genannten Eingangssignals darstellt, und Addiermittel enthält, die die Ausgangssignale der Multiplizierer addiert und so Proben der Nachbildungssignale erzeugt, und das Verfahren weiters einen Schritt enthält zur Abgabe eines Eingangssignals (x(t)) und zur Messung (PROG4) einer Anzahl von Proben (y-[kT]) des auf dem Sendezweig (TO) empfangenen zurückkehrenden Echosignals (y(t)) wenn alle Filterkoeffizienten auf 0 gesetzt sind, dadurch gekennzeichnet, daß das Verfahren einen weiteren Schritt enthält zum Messen (PROG2) der Faktoren der Nachbildungssignalproben und zwar durch aufeinanderfolgendes Messen der Nachbildungssignalproben, die man an einem ersten, dem veränderbaren Echokompensator (DIH, AD2) relativ nahen Ort erhält, wenn das Echokompensatorsystem von den anderen Teilen des Nachrichtenübertragungssystems getrennt ist und wenn alle Filterkoeffizienten (a0-a3, B), mit Ausnahme jenes, mit dem der Faktor multipliziert wird, auf Null gesetzt sind, daß während des genannten ersten Verfahrensschritts die Anzahl von Proben (y[kT]) des Echosignals (y(t)) von einem zweiten, dem veränderbaren Echokompensator relativ fernen Ort gemessen (PROG4) werden und daß diese Filterkoeffizienten als eine Funktion der beiden genannten Faktoren der Nachbildungsproben und der Anzahl von Echosignalproben ermittelt werden.

9. Verfahren nach Anspruch 8, dadurch gekennzeichnet, daß die Filterkoeffizienten (a0-a3, B) durch Prozessormittel (TSA) eines Echokompensatorsystems (DIH, AD2, TSA) nach Anspruch 1 ermittelt werden.

FIG.1

# FIG.2

## DSP

EP 0 272 714 B1

FIG.3

DIH

FIG.4